# DEMANDE DE BREVET EUROPEEN

(11) **EP 1 245 161 A1**
(43) Date de publication de la demande: **02.10.2002**
(21) Numéro de dépôt: 02290761.2
(22) Date de dépôt: 27.03.2002
(51) Int. Cl.: A23L 1/09, A23L 1/064

(54) **Procede de fabrication de compositions a base de fruits enrichies en fibres et compositions ainsi obtenues**

(30) Priorité: 30.03.2001 FR 0104420
(71) Demandeur: Roquette Frères, 62136 Lestrem (FR)
(72) Inventeur: Serpelloni, Michel, 62660 Beuvry-les-Bethune (FR)
(74) Mandataire: Boulinguiez, Didier

(57) **Abrégé**

L'invention a pour objet un procédé de fabrication de compositions à base de fruits enrichies en fibres, caractérisé par le fait qu'il comprend l'étape consistant à incorporer 1 à 30%, de préférence 2 à 20% et plus préférentiellement encore 2,5 à 15% en poids par rapport au produit fini de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

L'invention a également pour objet une composition à base de fruits enrichie en fibres, caractérisée en ce qu'elle comprend 1 à 30%, de préférence 2 à 20% et plus préférentiellement encore 2,5 à 15% en poids par rapport au produit fini desdites maltodextrines branchées.

## Description

La présente invention a pour objet un procédé de fabrication de compositions à base de fruits enrichies en fibres utilisant un saccharide particulier. Elle a également pour objet les compositions obtenues selon ce procédé, contenant un tel saccharide particulier.

Par compositions à base de fruits au sens de la présente invention, on entend en particulier les préparations de type confitures, gelées, fruits sur sucre, pâtes de fruits, marmelades, compotes, garnitures aux fruits, fourrages, nappages etc...

Les confitures, gelées ou pâtes de fruits se préparent par addition au jus naturel de fruits ou aux fruits d'une importante quantité de sucres tels que saccharose et sirop de glucose dans la plupart des cas. De la pectine et de l'acide citrique sont généralement ajoutés dans les confitures et gelées, ainsi que des amidons modifiés dans certaines confitures de fourrage ou de nappage, ou dans certaines préparations de fruits, pour améliorer la résistance à la cuisson. On obtient ainsi un produit plus ou moins ferme, dont la consistance varie suivant la nature du fruit, depuis celle d'une gelée proprement dite jusqu'à celle d'une pâte et dont la texture est corrigée par ajout de pectine. Les confitures et gelées comprenant fruits, sucres et pectine présentent généralement une matière sèche de 30 à 70%. Les confitures de fourrage comprenant en plus des amidons présentent quant à elles une matière sèche de 80 à 90%, alors que les préparations de fruits présentent une matière sèche de 30 à 60%.

Les pâtes de fruits comprenant fruits, sucres et pectine présentent une matière sèche de 70 à 85%.

Les fruits sur sucre sont des préparations intermédiaires destinées à être ajoutées aux yaourts, aux fromages blancs, aux glaces et aux pâtisseries. Ces préparations consistent en un mélange de fruits et de sucre, traité thermiquement et contenant des ingrédients technologiques tels que des arômes, colorants et agents de texture. Les agents de texture ont deux fonctions. Ils doivent à la fois donner une texture au fruit sur sucre qui soit pompable, et éviter l'exsudation de jus dans le produit final.

Ces agents de texture sont notamment des pectines, dont le pouvoir gélifiant est bien connu et qui sont largement utilisées dans la préparation de confitures. On utilise également des carraghénanes, des gommes, des alginates, du xanthane et des amidons modifiés ou des maltodextrines, l'utilisation des uns ou des autres dépendant du produit final. En cas d'utilisation des fruits sur sucre ou des confitures en pâtisserie, il se pose le problème de la cuisson supplémentaire lors de la cuisson du gâteau ou du biscuit. Il faut alors choisir des agents de texture qui soient résistants à la chaleur. Sachant d'autre part que ces compositions, souvent visibles dans le produit final, doivent conserver un aspect visuel de qualité supérieure du point de vue de la couleur, l'emploi de maltodextrines est limité par cette condition car elles génèrent une coloration brune lors de la cuisson. Les agents de texture doivent également être stables dans les conditions de pH généralement acides des confitures, gelées et fourrages, c'est à dire que ces agents de texture ne doivent pas subir d'hydrolyse au cours du temps, ce qui entraînerait des modifications de texture et des modifications de couleur et de saveur indésirables.

Outre ces considérations technologiques, les fabricants sont de plus en plus préoccupés par la nutrition et les bienfaits potentiels des aliments. En effet, la fréquence des cancers et maladies coronariennes, la méfiance des consommateurs suite aux récentes crises de l'industrie agroalimentaire, et la vulgarisation des connaissances nutritionnelles récentes accentue cette attente de produits sains, qui permettent de vivre mieux et plus longtemps. Les fibres alimentaires sont ainsi passées au premier plan des ingrédients fonctionnels. En effet, elles jouent un rôle de protection contre le cancer, les maladies cardiovasculaires, le diabète ou encore l'obésité. Il paraît donc intéressant d'enrichir les aliments en fibres.

Faisant le constat de cet état de la technique, la société demanderesse s'est donnée comme objectif la mise au point de compositions à base de fruits enrichies en fibres en mettant en oeuvre un ingrédient technologique qui satisfasse à toutes les exigences précitées.

Et c'est après de nombreux essais et études, que la société demanderesse a eu le mérite de trouver que l'objectif défini ci-dessus pouvait être atteint à la condition d'utiliser une maltodextrine branchée présentant des paramètres analytiques bien particuliers.

La présente invention a donc pour objet un procédé de fabrication de compositions à base de fruits enrichies en fibres, caractérisé par le fait qu'il comprend l'étape consistant à incorporer 1 à 30%, de préférence 2 à 20% et plus préférentiellement encore 2,5 à 15% en poids par rapport au produit fini de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

Par maltodextrines branchées on entend au sens de la présente invention les maltodextrines décrites dans la demande de brevet EP 1.006.128 dont la Demanderesse est titulaire. Ces maltodextrines branchées présentent un caractère d'indigestibilité qui a pour conséquence de diminuer leur pouvoir calorique, en empêchant leur assimilation au niveau de l'intestin grêle. Elles représentent donc une source de fibres indigestibles, bénéfiques pour le métabolisme et pour l'équilibre intestinal. A titre indicatif, leur taux de fibres insolubles est généralement supérieur à 50% sur matière sèche. Leur faible teneur en molécules de faible degré de polymérisation (« DP ») contribue également à leur faible caloricité. Leur teneur élevée en liaisons glucosidiques 1→6 a pour conséquence d'abaisser leur pouvoir cariogène en réduisant leur assimilation par les micro-organismes de la cavité buccale. Ce taux élevé en liaisons 1→6 leur confère également des propriétés prébiotiques tout à fait particulières : il est en effet apparu que les bactéries du cæcum et du colon de l'homme et des animaux, telles que les bactéries butyrogènes, lactiques ou propioniques métabolisent des composés hautement branchés. D'autre part, ces maltodextrines branchées favorisent le développement des bactéries bifidogènes au détriment des bactéries indésirables. Il en résulte des propriétés tout à fait bénéfiques pour la santé du consommateur.

Des produits présentant des fonctionnalités proches, comme notamment les fructo-oligo-saccharides commercialisés sous la dénomination ACTILIGHT ou RAFTILOSE, qui présentent également des effets bénéfiques pour la santé en termes de propriétés bifidogènes et d'apport de fibres, ont été proposés dans les aliments enrichis en fibres. Ces produits présentent cependant le désavantage d'être très instables en conditions de pH acides, comme il va l'être exemplifié par ailleurs. Cette instabilité se traduit par une hydrolyse progressive au cours du stockage, qui génère une libération indésirable de glucose et de fructose. Cette instabilité est dissuasive pour une utilisation dans les compositions à base de fruits qui présentent pratiquement toutes un pH acide.

La Demanderesse a alors trouvé qu'en mettant en oeuvre lesdites maltodextrines branchées dans un procédé de fabrication de compositions à base de fruits, l'on pouvait avantageusement obtenir des compositions à base de fruits enrichies en fibres par un procédé plus facile et plus rapide que les procédés classiques. En effet, l'incorporation desdites maltodextrines branchées au mélange de fruits et de sucre avant la cuisson diminue avantageusement le point d'ébullition du mélange ce qui implique une température et un temps de cuisson plus faibles et par conséquent un meilleur respect des qualités organoleptiques du produit fini (couleur et saveur, texture des fruits). D'autre part, lesdites maltodextrines branchées sont stables en conditions de pH acide, et stables à la cuisson comme il le sera exemplifié par ailleurs.

Toutes les compositions de maltodextrines branchées décrites dans la demande de brevet EP 1.006.128 sont appropriées à la fabrication de compositions à base de fruits selon l'invention.

Selon une variante préférée, lesdites maltodextrines branchées présentent une teneur en sucres réducteurs comprise entre 2 et 5% et un Mn compris entre 2000 et 3000 g/mole.

Selon une autre variante avantageuse, tout ou partie des maltodextrines branchées sont hydrogénées.

L'invention a également pour objet une composition à base de fruits enrichie en fibres, caractérisée en ce qu'elle comprend 1 à 30%, de préférence 2 à 20% et plus préférentiellement encore 2,5 à 15% en poids sec par rapport au produit fini de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

Avantageusement, lesdites maltodextrines branchées présentent une teneur en sucres réducteurs comprise entre 2 et 5% et un Mn compris entre 2000 et 3000 g/mole.

Selon une autre variante avantageuse, tout ou partie desdites maltodextrines branchées est hydrogénée.

Préférentiellement, une composition à base de fruits selon l'invention comprend 1 à 60% de fruits, 20 à 70% de sucres et 1 à 30% desdites maltodextrines branchées, ces pourcentages étant exprimés en poids sec par rapport au produit fini. A titre indicatif, les pourcentages de fruits exprimés en poids dans la préparation avant cuisson sont généralement compris entre 10 et 80%, selon le type de préparation considérée. Les compotes et les gelées mettent en oeuvre le plus souvent davantage de fruits que les compositions de fourrage et de nappage. Il est particulièrement avantageux d'utiliser de telles compositions à base de fruits enrichies en fibres pour le fourrage ou le nappage de pâtisseries ou de biscuits lorsque l'on veut attribuer à ces produits des vertus bifidogènes et que les procédés de fabrication de ceux-ci ne permettent pas d'atteindre la dose bifidogène recherchée et nécessaire pour prétendre à une influence sur la flore intestinale du consommateur. De même, pour la fabrication de yaourts bi-couches contenant des préparations de fruits, la dose bifidogène recherchée peut être atteinte à la fois par le biais du yaourt lui-même et par le biais de la préparation de fruits qui lui est adjointe. Ceci limite avantageusement les contraintes technologiques du formulateur de yaourt.

L'invention sera mieux comprise à la lecture des exemples qui suivent et de la figure qui s'y rapporte, qui se veulent illustratifs et non limitatifs.

### Exemple 1 : préparation d'une confiture de fourrage.

Afin de préparer une confiture de fourrage, on met en oeuvre un procédé selon l'invention comprenant la mise en oeuvre de maltodextrines branchées en comparaison avec un procédé classique.

Les maltodextrines branchées mises en oeuvre présentent entre 15 et 35% de liaisons glucosidiques 1-6, une teneur en sucres réducteurs comprise entre 2 et 5%, un indice de polymolécularité inférieur à 5 et une masse moléculaire moyenne en nombre Mn comprise entre 2000 et 3000 g/mole :

| | |
|---|---|
| Sucres réducteurs | 2,3 |
| Mn (g/mole) | 2480 |
| Mw (g/mole) | 5160 |
| Liaison 1,2 (%) | 10 |
| Liaison 1,3 (%) | 12 |
| Liaison 1,4 (%) | 49 |
| Liaison 1,6 (%) | 29 |

Procédé classique : on remplace les maltodextrines branchées soit par un sirop de glucose (PLOLYS®E7081 commercialisé par la demanderesse), soit par une maltodextrine standard (GLUCIDEX®29 commercialisée par la demanderesse).

On mélange les ingrédients (voir tableau ci-dessous), puis on procède à une cuisson à feu nu, à ébullition, du mélange pendant une durée nécessaire à l'obtention d'un brix de 90. Les paramètres de cuisson sont décrits dans le tableau ci-dessous.

| **INGREDIENTS (en poids)** | **PROCEDE SELON L'INVENTION** | **PROCEDE CLASSIQUE 1** | **PROCEDE CLASSIQUE 2** |
|---|---|---|---|
| **Maltodextrine s branchées** | 200 | - | - |
| **FLOLYS®E7081** | - | 246,9 | - |
| **GLUCIDEX®29** | - | - | 200 |
| **EAU** | 50 | 3,1 | 50 |
| **PUREE D'ABRICOTS** | 350 | 350 | 350 |
| **SACCHAROSE** | 400 | 400 | 400 |
| | | | |
| Viscosité de départ | 1050 mPa.s | 1900 mPa.s | 2000 mPa.s |
| Temps nécessaire jusqu'à ébullition | 6 min 20 | 6 min 10 | 6 min 20 |

| **Evolution du brix** | | | |
|---|---|---|---|
| Après 10 min | 64 | 65 | 65 |
| Après 12 min | 69 | 67 | 69 |
| Après 14 min | 71 | 69 | 71 |
| Après 18 min | 75 | 72 | 74 |
| Après 22 min | 81 | 77 | 80.5 |
| Après 26 min | 90 | 85 | 90 |
| Après 28 min | | 88 | |
| Après 30 min | | 90 | |
| | | | |
| **Coloration brune** | faible | importante | moyenne |

On observe que le temps nécessaire à l'obtention d'un brix de 90 est inférieur lorsqu'on utilise une maltodextrine standard ou une maltodextrine branchée. Ceci est particulièrement avantageux en ce qui concerne la préservation des qualités nutritionnelles et organoleptiques du fruit, puisque la cuisson est moins longue.

Toutefois, les qualités organoleptiques du produit obtenu selon le procédé conforme à l'invention sont supérieures à celle obtenues avec une maltodextrine classique, en ce sens qu'on génère avec les procédés classiques une coloration brune indésirable. Cette coloration est également observée lorsqu'on met en oeuvre un sirop de glucose.

La composition à base de fruits selon l'invention est avantageusement enrichie en fibres et stable, grâce à la mise en oeuvre de maltodextrines branchées stables en milieu acide et stables à la cuisson.

### Exemple 2 : étude de stabilité en milieu acide.

Afin d'estimer la stabilité des maltodextrines branchées dans les milieux acides, on prépare des solutions à différents pH, contenant soit des fructo-oligo-saccharides (ACTILIGHT), soit des maltodextrines branchées conformes à l'invention.

On mesure au cours du stockage l'évolution des masses moléculaires de ces oligosaccharides en solution, par exclusion stérique suivie d'une détection par réfractométrie différentielle.

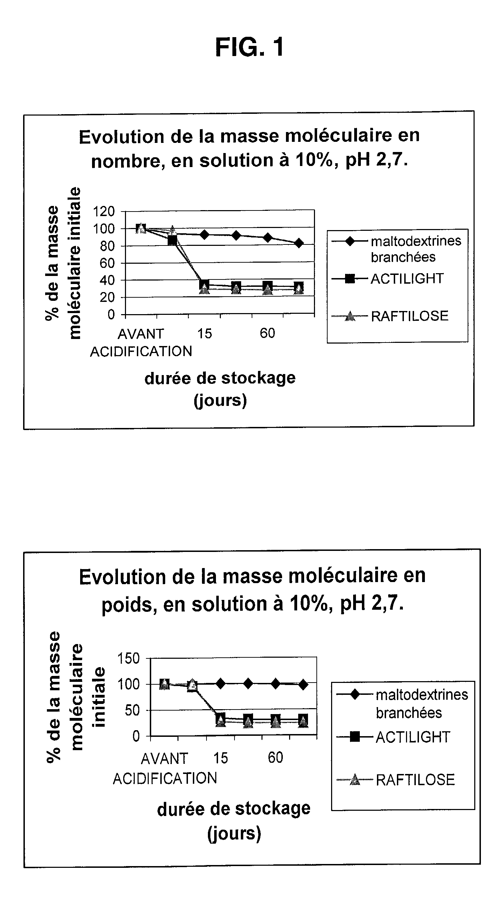

Les résultats sont illustrés par la figure 1. Dans le cas des maltodextrines branchées, on constate une très légère répercussion de l'acidification des solutions. Il y a donc une légère hydrolyse aux pH très acides (inférieurs à 3) qui se traduit par une évolution du poids moléculaire vers des valeurs plus basses. Après deux semaines de stockage, les différences ne sont pas supérieures à celles observées immédiatement après acidification. Après 1 mois de stockage, seules les valeurs obtenues pour les pH très faibles (inférieurs à 2,7) ont diminué par rapport au vieillissement de deux semaines. On passe d'un poids moléculaire en nombre de 2800 daltons à 2400 daltons pour des solutions à pH 2.

Dans le cas des fructo-oligo-saccharides, après deux semaines de stockage à pH 2 le poids moléculaire est réduit à 30% de sa valeur initiale. Après 1 mois, les solutions à pH 2 et 2,7 contiennent de l'ACTILIGHT très fortement dégradé.

Conclusion : les maltodextrines branchées sont bien adaptées à la fabrication de compositions à base de fruits de type confitures, gelées, fourrages et préparations de fruits présentant généralement un pH inférieur à 3.

### Exemple 3 : préparation de fruits pour yaourts.

| Formule : | | | |
|---|---|---|---|
| | Préparation de fruits témoin | Préparation de fruits selon l'invention | Préparation de fruits sans sucre ajouté selon l'invention |
| Ingrédients | % massique | | |
| Saccharose | 25,2 | 20,7 | 0 |
| Sirop de glucose MELIOSE®401981 | 16,8 | 13,8 | 0 |
| Purée de fruits** | 21 | 21 | 21 |
| Amidon modifié CLEARAM®CR0820 | 1,6 | 1,6 | 1,6 |
| Maltodextrines branchées (voir exl) | 0 | 7,5 | 42 |
| Eau | 34,65 | 34,65 | 34,65 |
| Pectine Unipectine OF 627 (DEGUSSA) | 0,6 | 0,6 | 0,6 |
| Aspartame | 0 | 0 | 0,9 |
| Acésulfame K | 0 | 0 | 0,9 |
| Acide citrique*** | 0,1 | 0,1 | 0,1 |
| Sorbate de potassium | 0,05 | 0,05 | 0,05 |
| TOTAL | 100 | 100 | 100 |

| | | | |
|---|---|---|---|
| ** purée de fruits surgelée concentrée à 50°brix | | | |
| *** % d'acide citrique à ajuster pour obtenir un pH de 3,8 (pH d'une préparation de fruits destinée à être mélangée à un yaourt). | | | |

Mode opératoire : on mélange les fruits avec la moitié du saccharose ou des édulcorants intenses, le sirop de glucose, l'amidon modifié et l'acide citrique. On chauffe la solution de pectine-maltodextrines branchées et le reste du saccharose dans l'eau à 85°C pendant 5 minutes et on l'ajoute au mélange précédent. On cuit à 95°C pendant 5 minutes et on ajoute le sorbate de potassium.

Commentaires : les maltodextrines branchées présentent une excellente stabilité en milieu acide tout en résistant aux traitements thermiques, deux critères essentiels pour l'élaboration de fruits sur sucre. Il n'est donc pas nécessaire de surdoser la formule de départ pour conserver la dose voulue de fibres en fin de process et en fin de date limite d'utilisation optimale.

Selon l'invention, lesdites maltodextrines branchées apportent plus de viscosité à la préparation que la recette témoin sans fibres solubles, les préparations ont plus de corps et développent une sensation beaucoup plus agréable :

Panel de dégustation : on fait déguster par un panel de 20 personnes des préparations de fruits selon l'invention en comparaison avec la recette témoin. On évalue deux critères : viscosité en bouche et aspect gélifié. On attribue au témoin la note 0 pour chaque critère, les résultats sont donnés dans le tableau ci-après (notes moyennes):

| | TEMOIN | RECETTE 1 | RECETTE 2 (sans sucre) |
|---|---|---|---|
| VISCOSITE EN BOUCHE | 0 | + 0,4 | + 0,8 |
| ASPECT GELIFIE | 0 | + 0,5 | + 1,8 |

Les préparations de fruits selon l'invention présentent un aspect plus gélifié que le témoin : l'aspect visuel est amélioré.

D'autre part, on a constaté que les préparations selon l'invention présentaient un seuil d'écoulement élevé, ce qui est particulièrement avantageux pour la préparation de yaourts bicouches, dans lesquels le risque de mélange de la sous-couche fruitée avec la masse blanche est sensiblement réduit.

Toutes les caractéristiques conjuguées des compositions selon l'invention font qu'elles sont particulièrement avantageuses pour les préparations de fruits, aussi bien au niveau nutritionnel (apport de fibres, faible caloricité) qu'au niveau rhéologique et organoleptique.

### Exemple 4 : étude de la stabilité à la cuisson.

On prépare selon la même recette que l'exemple précédent des préparations de fruit comprenant respectivement : 19% de maltodextrines branchées, 19% de maltodextrines branchées hydrogénées, 42% de maltodextrines branchées. Les deux premières comprennent également 23% de saccharose. Un témoin sans maltodextrines branchées est préparé avec 44,6% de saccharose. Les préparations sont soumises à une cuisson à 95°C pendant 5 minutes et à pH 3,8.

On mesure après cuisson le taux de saccharose et de maltodextrines branchées dans les préparations. Les résultats sont donnés par le tableau suivant :

| TAUX APRES CUISSON | TEMOIN | 19% maltodextrines branchées | 19% malt.br.hydrog énées | 42% maltodextrines branchées |
|---|---|---|---|---|
| saccharose | 44,6% | 24% | 24,2% | - |
| Maltodextrines branchées | - | 20,3 | - | 45,9 |
| Maltodextrines branchées hydrogénées | - | - | 18,9 | - |

Ces résultats illustrent la bonne stabilité des maltodextrines branchées après un traitement thermique à pH acide, celles-ci n'étant pas hydrolysées.

## Revendications

1. Procédé de fabrication d'une composition à base de fruits enrichie en fibres, **caractérisé par le fait qu'**il comprend l'étape consistant à incorporer 1 à 30%, de préférence 2 à 20% et plus préférentiellement encore 2,5 à 15% en poids par rapport au produit fini de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

2. Procédé selon la revendication 1, **caractérisé par le fait que** lesdites maltodextrines branchées présentent une teneur en sucres réducteurs comprise entre 2 et 5% et un Mn compris entre 2000 et 3000 g/mole.

3. Procédé selon la revendication 1 ou 2, **caractérisé par le fait que** tout ou partie des maltodextrines branchées sont hydrogénées.

4. Composition à base de fruits enrichie en fibres, **caractérisée en ce qu'**elle comprend 1 à 30%, de préférence 2 à 20% et plus préférentiellement encore 2,5 à 15% à en poids sec par rapport au produit fini de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

5. Composition à base de fruits selon la revendication 4, **caractérisée en ce que** lesdites maltodextrines branchées présentent une teneur en sucres réducteurs comprise entre 2 et 5% et un Mn compris entre 2000 et 3000 g/mole.

6. Composition à base de fruits selon l'une ou l'autre des revendications 4 et 5, **caractérisée en ce que** tout ou partie desdites maltodextrines branchées est hydrogénée.

7. Composition à base de fruits selon l'une quelconque des revendications 4 à 6, **caractérisée en ce qu'**elle comprend 1 à 60% en poids sec de fruits, 20 à 70% en poids sec de sucres et 1 à 30% en poids sec desdites maltodextrines branchées, ces pourcentages étant exprimés par rapport au produit fini.
